# EUROPÄISCHE PATENTSCHRIFT

(11) **EP 1 175 458 B1**
(45) Veröffentlichungstag und Bekanntmachung des Hinweises auf die Patenterteilung: **07.12.2005**
(21) Anmeldenummer: 00925205.7
(22) Anmeldetag: 12.04.2000
(51) Int. Cl.: C08J 9/00, C08L 33/24

(54) **VERFAHREN ZUR HERSTELLUNG VON BLOCKFÖRMIGEN POLYMETHACRYLIMIDSCHAUMSTOFFEN**
METHOD FOR PRODUCING BLOCK-SHAPED POLYMETHACRYLIMIDE FOAMED MATERIALS
PROCEDE DE PRODUCTION DE MOUSSES SYNTHETIQUES DE POLYACRYLIMIDE SOUS FORME DE BLOC

(30) Priorität: 21.04.1999 DE 19917987
(43) Veröffentlichungstag der Anmeldung: 30.01.2002
(73) Patentinhaber: Röhm GmbH & Co. KG, 64293 Darmstadt (DE)
(72) Erfinder: SERVATY, Sabine, D-64331 Weiterstadt (DE); GEYER, Werner, D-64367 Mühltal (DE); RAU, Norbert, D-67551 Worms (DE); KRIEG, Manfred, D-64289 Darmstadt (DE)
(86) Internationale Anmeldenummer: PCT/EP2000/003243
(87) Internationale Veröffentlichungsnummer: WO 2000/063280

(56) Entgegenhaltungen:
- EP-A- 0 874 019

## Beschreibung

Die Erfindung betrifft ein Verfahren zur Herstellung von Polymethacrylimidschaumstoffen sowie Blöcke, Platten und dergleichen aus derartigen Polymethacrylimidschaumstoffen sowie die als Zwischenprodukte auftretenden Formkörper aus dem Copolymerisat aus Methacrylsäure und Methacrylnitril.

Es ist bekannt, Polymethacrylimidschaumstoffe in Form von Blöcken herzustellen. Dabei wird zunächst aus Methacrylsäure und Methacrylnitril durch Copolymerisation ein Vorprodukt hergestellt, das bereits in entsprechender Plattenform erhalten wird. Anschließend wird das Copolymerisat zum Imid zyklisiert. Ein im Reaktionsgemisch vorhandenes Teibmittel sorgt beim Erhitzen für die entsprechende Schaumbildung.

Bisher war es nur möglich, entsprechende Polymerisatplatten mit einer Dicke bis zu 30 mm direkt herzustellen. Da es unbedingt erforderlich ist, einen gleichmäßigen und sicheren Polymerisationsablauf zu gewährleisten, muß während der Polymerisation altemierend abgekühlt und aufgeheizt werden, insbesondere, weil bei einer zu starken Erhitzung die Polymerisation nicht mehr kontrolliert werden kann und es zu ungleichmäßigen Strukturen kommt. Diese alternierenden Abkühl- und Heizphasen sind natürlich umständlich und bringen zudem einen hohen Energie- und Wasserverbrauch mit sich.

Zudem weisen Polymerisatplatten mit nur bis zu 30 mm Dicke eine ganze Reihe von Nachteilen auf. Einmal müssen, wenn Schaumblöcke von größerer Dicke verlangt sind, mehrere geschäumte Platten zusammengeklebt werden. Außerdem ist der bei der Konfektionierung anfallende Abfall aus den Randbereichen sehr hoch.

In der EP 0874019 wird ein Verfahren zur Herstellung von Polyrnethacrylimid-Schaumstoffen offenbart. Dabei werden 1-5 Gew.-% Magnesiumoxid zugesetzt. Dies führt zu verbesserten thermomechanischen Eigenschaften. Es können jedoch keine sehr dicken Polytnerisatplatten bzw. Schaumblöcke hergestellt werden. Nachteilig ist zudem die zweistufige Verfahrensführung.

In der deutschen Patentschrift Nr. 1817 156 wird bereits ein Verfahren beschrieben, nach welchem verschäumbare Kunststoffe in Plattenform hergestellt werden, indem man Gemische aus Methacrylnitril und Methacrylsäure zwischen zwei Glasplatten, welche mit einer flexiblen Schnur abgedichtet sind, polymerisiert. Dem Ausgangsgemisch ist bereits ein Treibmittel, nämlich Formamid oder Monoalkylformamid, zugegeben. Ferner sind Radikalbildner zugegen, beispielsweise als Zweikomponentengemisch aus tert.-Butylperpivalat und Benzoylperoxid.

Die Polymerisation findet bei Temperaturen von beispielsweise 40, 45 oder 48 °C statt und dauert etwa 15 bis 40 Stunden. Anschließend wird bei etwa 100 °C getempert und sodann auf 170-300 °C erhitzt. Bei den letzteren Temperaturen findet die Zyklisierung zu Imid und die Schaumbildung statt.

Es ist schwierig, die Polymerisation gleichförmig zu gestalten, da die Temperatur sehr leicht die Solltemperatur übersteigen kann. Temperaturschwankungen müssen deshalb sehr genau kontrolliert werden und durch alternierende Abkühl- oder Aufwärmphasen ausgeglichen werden.

Platten mit einer Dicke von über 30 mm lassen sich nach diesem Verfahren nicht herstellen, da es dabei immer wieder zu Temperaturerhöhungen kommt und die entstehende Wärme nicht schnell genug abgeführt werden kann, weil die thermische Leitfähigkeit des Polymerisationsgemisches relativ schlecht ist Unkontrollierbare und nicht steuerbare Temperaturerhöhungen führen natürlich zu weiterer erhöhter Radikalbildung, so daß die Reaktion sehr leicht außer Kontrolle gerät.

In der EP 0 356 714 A1 wird ein ähnliches Verfahren wie in der deutschen Patentschrift Nr. 1 817 156 beschrieben. Als Radikalbildner wird beispielsweise Azo-bis-isobutyronitril verwendet, dem zu polymerisierenden Gemisch werden 0,1 - 10 Gew.-% an elektrisch leitfähigen Partikeln zugesetzt.

Auch bei diesem Verfahren stellen sich die vorstehend genannten Probleme ein, und die gemäß Beispiel 1 dieser europäischen Patentanmeldung erhaltenen Polymerisatplatten weisen lediglich eine Dicke von 25 mm auf.

Obwohl bereits eine ganze Reihe von Verfahren zur Herstellung von geschäumten Platten aus Polymethacrylimiden bekannt ist, besteht noch ein Bedarf an verbesserten Verfahren zur Herstellung derselben und auch an verbesserten Polymethacrylimidplatten.

Insbesondere besteht somit ein Bedarf an dicken Schaumblöcken und insbesondere an einem Verfahren, mit dem derartige Blöcke hergestellt werden können, ohne daß man mehrere Blöcke zusammenkleben müßte.

Aufgabe der Erfindung ist es deshalb, derartige Blöcke insbesondere in Plattenform zur Verfügung zu stellen sowie ein Verfahren zur Herstellung derselben, mit dem ein einheitlicher Block mit Dicken bis zu 80 mm und mehr in einem hergestellt werden kann, das einen sicheren und kontrollierten Polymerisationsablauf erlaubt und das mit reduziertem Wasser- und Energiebedarf arbeitet und das Blöcke liefert, bei denen beim Konfektionieren relativ wenig Abfall anfällt. Aufgabe der Erfindung ist es ferner, ein entsprechendes Verfahren zur Verfügung zu stellen, bei dem das temperierende Bad, insbesondere das temperierende Wasserbad weitgehend mit konstanter Temperatur gefahren werden kann.

Diese Aufgabe wird gelöst durch ein Verfahren zur Herstellung von blockförmigen Polymethacrylimidschaumstoffen durch Copolymerisation von Methacrylsäure und Methacrylnitril sowie ggf. weiterer copolymerisierbarer Monomeren in Gegenwart von radikalbildenden Initiatoren, Nachpolymerisation und Zyklisierung des Copolymerisats zum Polyimid und Umwandlung in einen Schaumstoff, das dadurch gekennzeichnet ist, daß man die Copolymerisation in Gegenwart von einem Gemisch, umfassend mindestens drei Initiatoren mit abgestuften Halbwertszeiten durchführt.

Gegenstand ist somit ein Verfahren gemäß der Lehre von Patentanspruch 1. Weitere vorteilhafte Ausführungsformen werden in den Patentansprüchen 2 bis 7 beschrieben sowie entsprechend hergestellte Blöcke in den Ansprüchen 8 bis 9. Gegenstand der Erfindung sind ferner Verfahren gemäß Anspruch 10 sowie Polymerisatplatten gemäß Anspruch 11 und die Verwendung gemäß Anspruch 12.

Abgestufte Halbwertszeit im Rahmen der Erfindung bedeutet, daß die mindestens drei Initiatoren jeweils für sich bei einer bestimmten Temperatur unterschiedliche Halbwertszeiten besitzen bzw. die gleiche Halbwertszeit aufweisen, jedoch in unterschiedlichen Temperaturbereichen. Vorzugsweise werden Initiatoren verwendet, die jeweils eine Halbwertszeit von einer halben Stunde in Temperaturbereichen aufweisen, die mindestens 10 °C auseinander liegen.

In einer besonders vorteilhaften Ausführungsform des erfindungsgemäßen Verfahrens wird ein Initiatorengemisch verwendet, das Niedrig-, Mittel- und Hochzerfaller umfaßt, die eine Halbwertszeit von 1 Stunde in den Bereichen 40 bis 80, 80 bis 110 und 110 bis 200 °C, vorzugsweise 110 bis 150 °C aufweisen.

Vorzugsweise werden Initiatorgemische verwendet, die mindestens vier Initiatoren mit jeweils einer Halbwertszeit in der Größenordnung von einer Stunde in unterschiedlichen Temperaturbereichen umfassen.

Die Menge des verwendeten Initiatorgemischs kann in verhältnismäßig weiten Grenzen variiert werden; es kann damit die Polymerisationszeit gesteuert werden, auch läßt sich die Polymerisationstemperatur durch die Menge der verwendeten Initiatoren beeinflussen. Die im Rahmen der Erfindung verwendeten Mengenangaben sind in Gewichtsteile Initiator pro 100 Gewichtsteile Monomere angegeben. Vorteilhaft ist es, eine Gesamtmenge an Initiatorgemisch von etwa 0,2 bis 0,3 Gewichtsteile pro 100 Gewichtsteile Monomere einzusetzen, vorzugsweise 0,21 bis 0,24 Gewichtsteile.

Das Gewichtsverhältnis der einzelnen Initiatoren zueinander im Initiatorengemisch kann ebenfalls innerhalb verhältnismäßig weiter Grenzen variiert werden; bevorzugt liegt das Gewichtsverhältnis der einzelnen Initiatoren zueinander im Bereich von 1:1 bis 1:10, vorzugsweise 1:1 bis 1:4. Geeignete Mengen und Mischungsverhältnisse können anhand einfacher Vorversuche bestimmt werden.

Gegenstand der Erfindung sind ferner Schaumblöcke, insbesondere Schaumplatten mit einer Dicke bis zu 80 mm, die nach einem der vorstehend angebenen Verfahren erhältlich sind.

Zur Herstellung der blockförmigen Schaumstoffe werden zunächst Monomerengemische, welche Methacrylsäure und Methacrylnitril, vorzugsweise in einem Molverhältnis zwischen 2:3 und 3 : 2 als Hauptbestandteile enthalten, hergestellt. Zusätzlich können weitere Comonomeren verwendet werden, wie z.B. Ester der Acryl- oder Methacrylsäure, Styrol, Maleinsäure oder Itaconsäure bzw. deren Anhydride, Vinylpyrrolidon usw. Dabei sollte der Anteil der Comonomeren nicht mehr als 30 Gew.-%, vorzugsweise nicht mehr als 10 Gew.-% der beiden Hauptbestandteile betragen. Geringe Mengen von vemetzenden Monomeren, wie z.B. Allylacrylat, können mitverwendet werden. Die Mengen sollten jedoch vorzugsweise höchstens von 0,05 bis 1 Gew.-% betragen. Das Polymerisationsgemisch enthält ferner mindestens drei Initiatoren, die jeweils eine Halbwertszeit in der Größenordnung von einer Stunde in unterschiedlichen Temperaturbereichen aufweisen. Es ist vorteilhaft, wenn entsprechende Initiatoren aus mindestens vier Temperaturbereichen eingesetzt werden. Geeignete Temperaturbereiche sind beispielsweise 50 bis 57 °C als erster Bereich, 60 bis 80 °C als zweiter Bereich, 85 bis 105 °C als dritter Bereich sowie 115 bis 125 °C als vierter Bereich. Als Initiator aus den einzelnen Temperaturbereichen können jeweils eine einzige Verbindung als Initiator verwendet werden, es ist jedoch auch möglich, jeweils zwei oder mehrere Initiatoren mit den entsprechenden Halbwertzeiten aus den entsprechenden Temperaturbereichen einzusetzen.

Als geeignete Initiatoren, die erfindungsgemäß in einem mindestens drei Initiatoren umfassenden Gemisch verwendet werden, können an sich üblich Initiatoren verwendet werden, wie sie für die Radikalbildung bei radikalich initiierten Polymerisation verwendet werden. Dazu gehören Verbindungen wie organische Peroxide, wie Dicumylperoxid, Peroxydicarbonate wie Diisopropylperoxydicarbonat, Perester wie Tert-butylperoxy-2-ethylhexanoat und dgl.. Auch weitere Verbindungstypen, welche Radikale bilden können, sind im Rahmen der Erfindung geeignet. Hierzu gehören insbesondere Azo-Verbindungen wie Azo-bis-(isobutyronitril) und Azo-bis-(2,4,-dimethylvaleronitril).

Im Rahmen der Erfindung sind besonders Initiatorengemische geeignet, deren Komponenten ausgewählt sind aus folgenden Initiatoren: Azo-bis-(isobutyronitril), t-Butylperoctoat, t-Butylperbenzoat, t-Butylperpivalat, Azo-bis-(2,4-dimethylvaleronitril), t-Butylperneodecanoat, Dibenzoylperoxid, bis-(4-t butylcyclohexyl)-peroxidicarbonat, Cumylperoxi-neodecanoat, 1,4-Di(2-neodecanoylperoxy-isopropyl)benzol und dgl.

Der Tabelle 1 sind geeignete Initiatoren zu entnehmen, für die jeweils auch die Temperaturen für Halbwertszeiten für 10 Stunden, 1 Stunde und 1 Minute angegeben sowie die Halbwertszeit in Stunden für eine Reihe von Temperaturen. In Tabelle 2 wird die Abhängigkeit von Halbwertszeit und Temperatur graphisch dargestellt. Anhand dieser Graphik lassen sich auf einfache Weise Initiatorgemische zusammenstellen.

In Tabelle 3 werden Azo-Verbindungen aufgezählt, die im Rahmen der Erfindung als Initiatoren geeignet sind.

In Tabelle 4 werden Halbwertszeiten von verschiedenen Azo-Verbindungen graphisch dargestellt.

Die Halbwertszeit der verwendbaren Initiatoren wird im allgemeinen bereits von der Herstellerfirma angegeben. Sie läßt sich leicht analytisch bestimmen, wobei sich als Lösungsmittel im allgemeinen Benzol als geeignet erwiesen hat. Die Bestimmung erfolgt im allgemeinen mit einer 0,1-molaren Lösung

Das Gemisch für die Copolymerisation enthält ferner Treibmittel, die sich bei Temperaturen von etwa 150 bis 250 °C entweder zersetzen oder verdampfen und dabei eine Gasphase bilden. Als Treibmittel seien beispielsweise genannt die stickstoffhaltigen Verbindungen Harnstoff, Monomethyl- oder N,N'-Dimethylharnstoff, Formamid oder Monomethylformamid. Weitere stickstofffreie Treibmittel sind Ameisensäure, Wasser oder einwertige aliphatische Alkohole insbesondere solche mit drei bis acht Kohlenstoffatomen. Die Treibmittel werden im allgemeinen in Mengen von 0,5 bis 8 Gew.-% bezogen auf die eingesetzten Monomeren verwendet.

Die Polymerisation findet zweckmäßig in Blockform statt. Bei der Herstellung von flachen, z.B. in flachen Schichten mit Dicken bis zu 80 mm, befindet sich das Monomerengemisch zwischen zwei Glasplatten, die am Rand jeweils abgedichtet sind und eine Art Flachkammer bilden. Diese Flachkammer ist von einem Wasserbad umgeben, das auf die gewünschte Polymerisationstemperatur eingestellt wird.

Die Polymerisation kann weitgehend oder über weite Bereiche unter isothermen Bedingungen durchgeführt werden, d.h. bei konstanter Wasserbadtemperatur. In vielen Fällen ist es möglich von Anfang bis zum Ende der Polymerisation die Wasserbadtemperatur konstant zu halten. Ggf. kann die Wasserbadtemperatur aber auch zunächst über lange Zeit konstant gehalten werden und nach einer bestimmten Zeit erhöht werden, um einen Teil der Polymerisation bei einer höheren Temperatur durchzuführen.

Auch in dieser nächsten, bei einer höheren Temperatur durchgeführten Polymerisationsphase kann die Wasserbadtemperatur konstant gehalten werden.

Die gewählte Wasserbadtemperatur hängt ab von der Dicke der Polymerisationskammer und der bei der Polymerisation verwendeten Rezeptur. Dabei ist es im allgemeinen vorteilhaft, mit steigender Dicke der herzustellenden Platte die Polymerisationstemperatur und damit auch die Temperatur des Wasserbads zu niedrigeren Werten zu verschieben.

Die geeignete Temperatur für Rezeptur und Dicke kann jeweils durch einfache Vorversuche optimiert werden.

Es versteht sich von selbst, daß die Temperatur auf die Dicke der Kammer und der Rezeptur so eingestellt wird, daß die bei der Polymerisation frei werdende Wärme in ausreichendem Maße abgeführt werden kann, ohne daß es während der Polymerisation zu unerwünschten Temperaturen im Polymerisationsgemisch kommt. Nach Abschluß des Polymerisationsvorgangs, der von dem umgebenden Wasserbad gesteuert wird, wird eine Nachpolymerisation in einem Wärmeschrank durchgeführt. Die Nachpolymerisation findet im allgemeinen bei Temperaturen von 38 bis 140 °C statt. Für die Endpolymerisation im Temperschrank reichen im allgemeinen 10 bis 1000 °C Stunden aus.

Nach Abschluß der Polymerisation wird der Block auf eine Temperatur von etwa 180 bis 250 °C erhitzt, bei welcher Temperatur die Zyklisierung zur Imidstruktur und die Schaumbildung stattfindet.

Im allgemeinen reichen Zeiten von 3 bis 5 Stunden für diese thermische Nachbehandlung aus.

Die dabei erhaltenen Blöcke zeichnen sich durch eine homogene gleichmäßige Struktur aus.

Ein weiterer Gegenstand der Erfindung ist ein Verfahren zur Herstellung von Polymerisatplatten durch Copolymerisation von Methacrylsäure und Methacrylnitril sowie ggf. weiterer copolymerisarbarer Monomeren in Gegenwart von radikalbildenden Initiatoren und Nachpolymerisation, das dadurch gekennzeichnet ist, daß man die Copolymerisation in Gegenwart von einem Gemisch umfassend mindestens drei Initiatoren mit abgestuften Halbwertszeiten durchführt.

Diese Polymerisatplatten entstehen als Zwischenprodukt bei der Herstellung der blockförmigen Methacrylimidschaumstoffe gemäß der Erfindung. Gegenstand der Erfindung sind ferner Polymerisatplatten erhältlich nach dem vorstehend angegebenen Verfahren.

Es war besonders überraschend, daß es mit dem erfindungsgemäßen Verfahren möglich ist, isotherm, d.h. bei konstanter Temperatur, die Polymerisation durchzuführen und dabei Polymerisatblöcke mit Dicken bis zu 80 mm zu erhalten, die ein einheitliches Eigenschaftsprofil durch die gesamte Dicke des Blockes aufweisen, was ein Zeichen für eine gleichmäßige homogene Polymerisation ist. Die daraus hergestellten Schaumblöcke können als solche konfsktioniert werden, wobei an den Randbereichen nur sehr wenig Abfall anfällt. Es ist auf diese Weise möglich, Formkörper entsprechender Dicke herzustellen unter Einsatz nur eines einzigen Blockes, wozu früher mehrere zusammengeklebte Blöcke erforderlich waren. Die erhaltenen einstückig geschäumten Blöcke bzw. Platten haben bevorzugt Dicken von 80 bis 300 mm.

Die Schaumplatten bzw. Schaumblöcke gemäß der Erfindung sind sehr wertvolle Werkstoffe und können insbesondere als Bauteile beim Flugzeugbau zum Einsatz gelangen. Die gemäß der Erfindung hergestellten Polymerisatblöcke zeichnen sich durch eine sehr gleichmäßige Struktur aus, sie können beliebig lang gelagert werden und ggf. von Fall zu Fall in Schaumplatten durch entsprechenden Erhitzen umgewandelt werden.

Die Erfindung wird anhand folgender Beispiele näher erläutert:

### Beispiel 1:

Ein Gemisch aus 61 Teilen Methacrylsäure, 39 Teilen Methacrylnitril, 4,7 Teilen Formamid und 4,2 Teilen Propanol-2 und einem Iniatorengemisch von 0,3 Teilen t-Butylperpivalat, 0,04 Teilen t-Butylper-2-ethylhexanoat, 0,07 Teilen t-Butylperbenzoat und 0,077 Cumylpemeodecanoat wird zwischen zwei Glasplatten, die einen Abstand von 23 mm aufweisen und die durch eine Abdichtungsschnur abgedichtet sind, 66 Stunden bei einer Wasserbadtemperatur von 38 °C polymerisiert, anschließend wird 24 Stunden in einem Wärmeschrank bei einer Temperatur von 115 °C nachpolymerisiert. Es werden gleichmäßige Platten erhalten. Während der Polymerisation, die durch das Wasserbad-gesteuert wird, finden praktisch keine oder nur geringfügige Temperaturschwankungen statt, die nicht ein Umstellen der Wasserbadtemperatur erforderlich machen.

Die erhaltenen Platten lassen sich problemlos durch eine Hitzebehandlung bei einer Temperatur von 170 bis 200 °C in geschäumte Platten umwandeln.

### Beispiel 2:

Ein gleiches Gemisch wie in Beispiel 1 wird in einer Flachkammer mit einem Abstand der Glasplatten von 30 mm polymerisiert. Dabei wird das Wasserbad 92 Stunden auf 33 °C, 10 Stunden auf 33 bis 38 °C und 14 Stunden auf 38 °C gehalten. Die Temperung im Wärmeschrank bei Temperaturen von 115 °C wird innerhalb von 40 Stunden durchgeführt.

Die Platten weisen eine gleichmäßige Struktur auf und lassen sich problemlos in geschäumte Materialien umwandeln.

### Beispiel 3:

Eine gleiche Zusammensetzung wie in Beispiel 1 wird in einer Flachkammer polymerisiert, deren Glasplatten von 50 mm aufweisen. Das Wasserbad wird 198 Stunden auf 28 °C, 30 Stunden auf 28 bis 37 °C und 24 Stunden auf 37 °C gehalten. Die Nachpolymerisation wird bei einer Temperatur von 115 °C innerhalb 50 Stunden durchgeführt.

### Beispiele 4 bis 6:

In den folgenden Beispielen wird ein Polymerisationsgemisch polymerisiert, das folgende Zusammensetzung hat: 56 Teile Methacrylsäure, 44,0 Teile Methacrylnitril, 1,0 Formamid, 3,3 Teile Propanol-2, 0,31 Teile Allylmethacrylat, 0,03 Teile t-Butylperpivalat, 0,03 Teile t-Butylper-2-ethylhexanoat, 0,1 Teile t-Butylperbenzoat und 0,077 Teile Cumylpemeodecanoat. Die Polymerisation wird jeweils in Flachkammern mit einem Glasplattenabstand von 23 mm, 30 mm und 50 mm durchgeführt. Dabei beträgt die Polymerisationszeit bei 23 mm 80 Stunden bei 37 °C und eine Nachpolymerisation im Wärmeschrank 32 Stunden; bei 30 mm Abstand 114 Stunden bei 32 °C, 10 Stunden bei 32 bis 38 °C und 24 Stunden bei 38 °C sowie einer Nachpolymerisation im Wärmeschrank von 45 Stunden; bei 50 mm Abstand beträgt die Polymerisationszeit 198 Stunden bei 27°C, 24 Stunden bei 27 bis 37 °C und 24 Stunden bei 37 °C. Die Nachpolymerisation im Wärmeschrank dauert 57 Stunden. Alle Platten zeigen gleichförmigen Aufbau und lassen sich ohne weiteres zu geschäumten Materialien verarbeiten.

Weitere Beispiele sind tabellarisch in Tabelle A zusammengefaßt.

**Tabelle A**

| Initiatoren | Dicke (mm) | Polymerisations temperatur (°C) | ΔT (°C) |
|---|---|---|---|
| DIPND:V77:V69:V73 | | | |
| 0,083;0,03:0,04:0,07 | 23 | 38 | 2,0 |
| 0,078:0,03:0,04:0,07 | 23 | 38 | 1,4 |
| 0,09:0,03:0,04:0,07 | 23 | 38 | 2,3 |
| 0,09:0,03:0,04:0,07 | 30 | 35 | 3,4 |
| 0,09:0,03:0,04:0,07 | 50 | 29 | 2,3 |

ΔT bedeutet die maximale Temperaturdifferenz zwischen Wasserbad und Polymerisationsgemisch während der Polymerisation.
DIPND = 1,4-Di(2-neodecanoylperoxy-isopropyl)benzol
TBPP = t-Butylperpivalat
TBPEH = t-Butylperoctoat
TBPB = t-Butylperbenzoat

Die auf diese Weise erhaltenen Polymerisatplatten weisen eine einheitliche gleichmäßige Struktur auf. Während der Polymerisation, die durch eine gleichbleibende Wasserbadtemperatur (Polymersationstemperatur) gesteuert wird, bleibt auch die Temperatur innerhalb der Polymerisationsmasse praktisch konstant. Die Abweichungen in der Polymersationsmasse betragen nur wenige Grad, maximal 3,4 °C. Die Temperatur wird während der Polymerisation durch eine in die Polymerisationsmasse eingeführtes Thermoelement kontrolliert. Die geringfügigen Temperaturschwankungen sind vernachlässigbar und sind weit von den Temperaturausschlägen entfernt, die man erhält, wenn man nur mit einem oder zwei Initiatoren arbeitet und versucht, mit einem isothermen Wasserbad die Reaktion zu kontrollieren. Dabei kommen Temperaturausschläge von 13 °C und mehr zustande, wodurch die Polymerisation unkontrollierbar wird und es zu beschleunigter Polymerisation kommt und Platten erhalten werden, die entweder Minderqualitäten sind oder Ausschußware.

Es war ferner überraschend, daß sich das erfindungsgemäße Verfahren auch auf die Herstellung von Polymerisatplatten bzw. den entsprechenden plattenförmigen oder blechförmigen Schaumstoffen anwenden läßt, die Füllmittel enthalten. So lassen sich Platten herstellen, die übliche Füllmittel enthalten. Vorzugsweise lassen sich gemäß der Erfindung auch Schaumstoffe herstellen, die elektrisch leitfähige Partikel enthalten, insbesondere Kohlenstoffpartikel wie Leitruß, z.B. das Handelprodukt Ketjenblack 600EC, Hersteller Akzo Nobel Chemie. Außer Ruß lassen sich auch Carbonfasern als Füllmittel entweder allein oder zusätzlich zu weiteren Füllmitteln verwenden.

### Beispiel 7:

### Herstellung von mit Ruß gefüllten Polymerisatplatten

In 41901,18g Methacrylsäure, 32656,08g Methacrylnitril, 2982,29g Propanol-2, 149,11g MgO und 1,4911g Allylmethacrylat wird 1680,00g Ruß (Ketjenblack 600EC) 50 Minuten lang dispergiert. Sodann werden die gelösten Initiatoren eingerührt und die Polymerisationslösung 30 Minuten lang evakuiert. Die Polymerisationslösung ist ferner mit 50 ppm Chinowstabilisiert.

Auf gleiche Weise wird eine zweite Kammer gefüllt, wobei jedoch 45 Minuten dispergiert und 40 Minuten evakuiert wird. Mit der gleichen Zusammensetzung wird eine dritte Kammer gefüllt, wobei jedoch unter Vakuum dispergiert wird während 25 Minuten und noch 20 Minuten weiter evakuiert wird. Die Polymerisation wurde ein allen drei Fällen bei 34 °C durchgeführt, wozu 73,25 Stunden benötigt wurden. Anschließend wurde 13 Stunden bei 34 bis 60 °C, 3 Stunden bei 60 °C, 10 Stunden bein 60 bis 100 °C , 5 Stunden bei 100 bis 115 °C und 3 Stunden bei 115 °C getempert Die erhaltenen Polymerisatplatten weisen einwandfreie Qualität auf. Die Temperaturabweichungen während der Polymerisation sind vernachlässigbar.

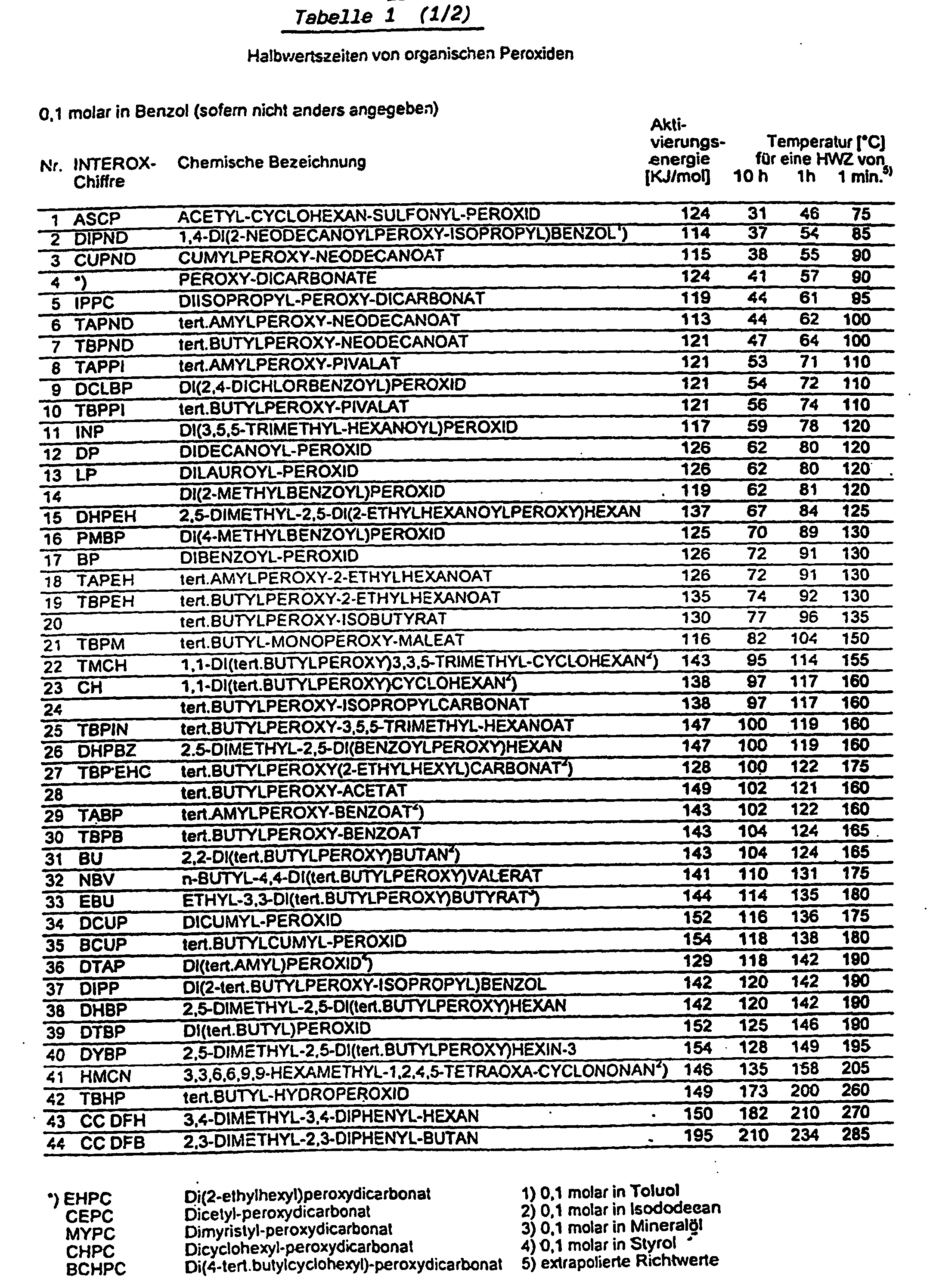

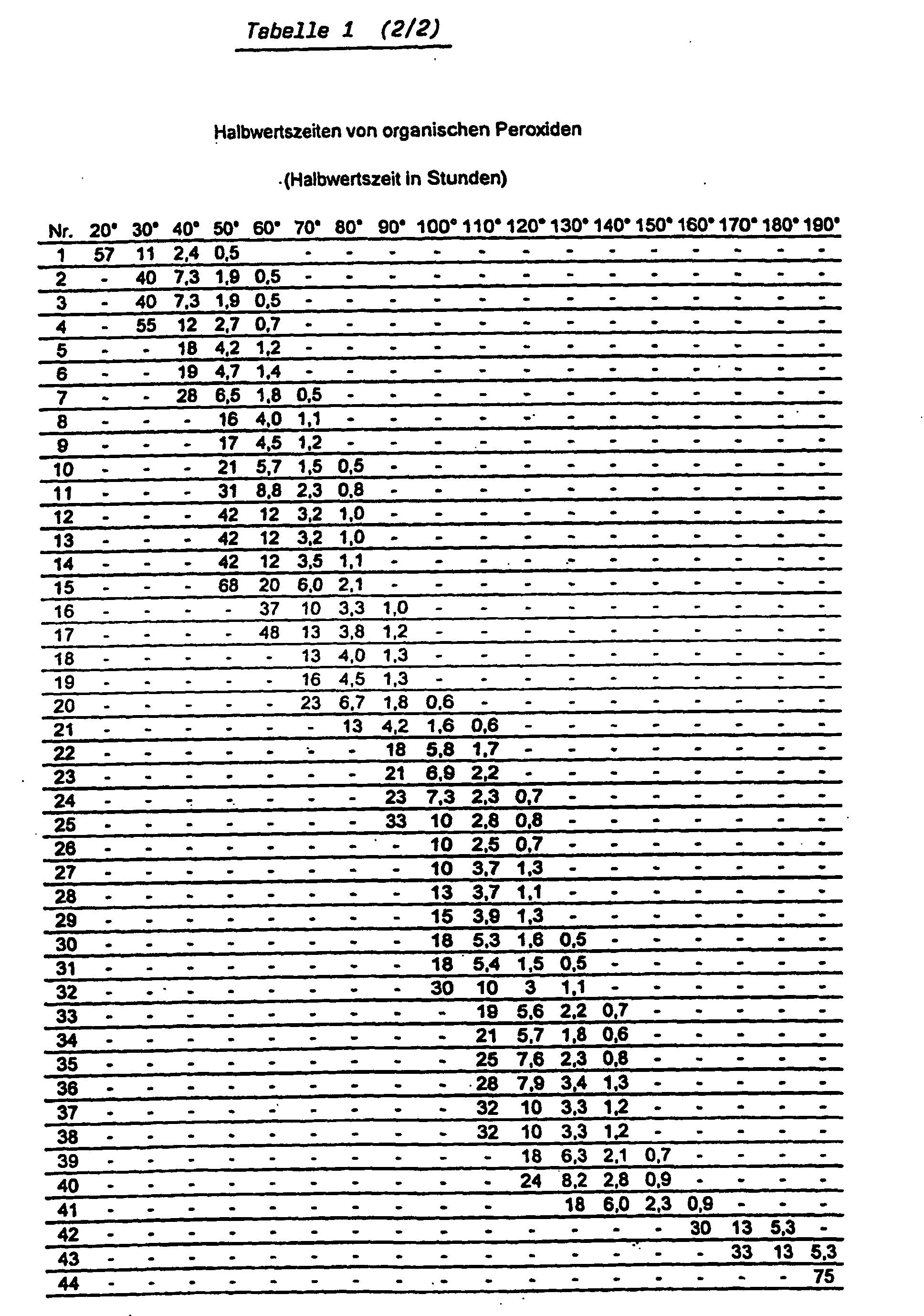

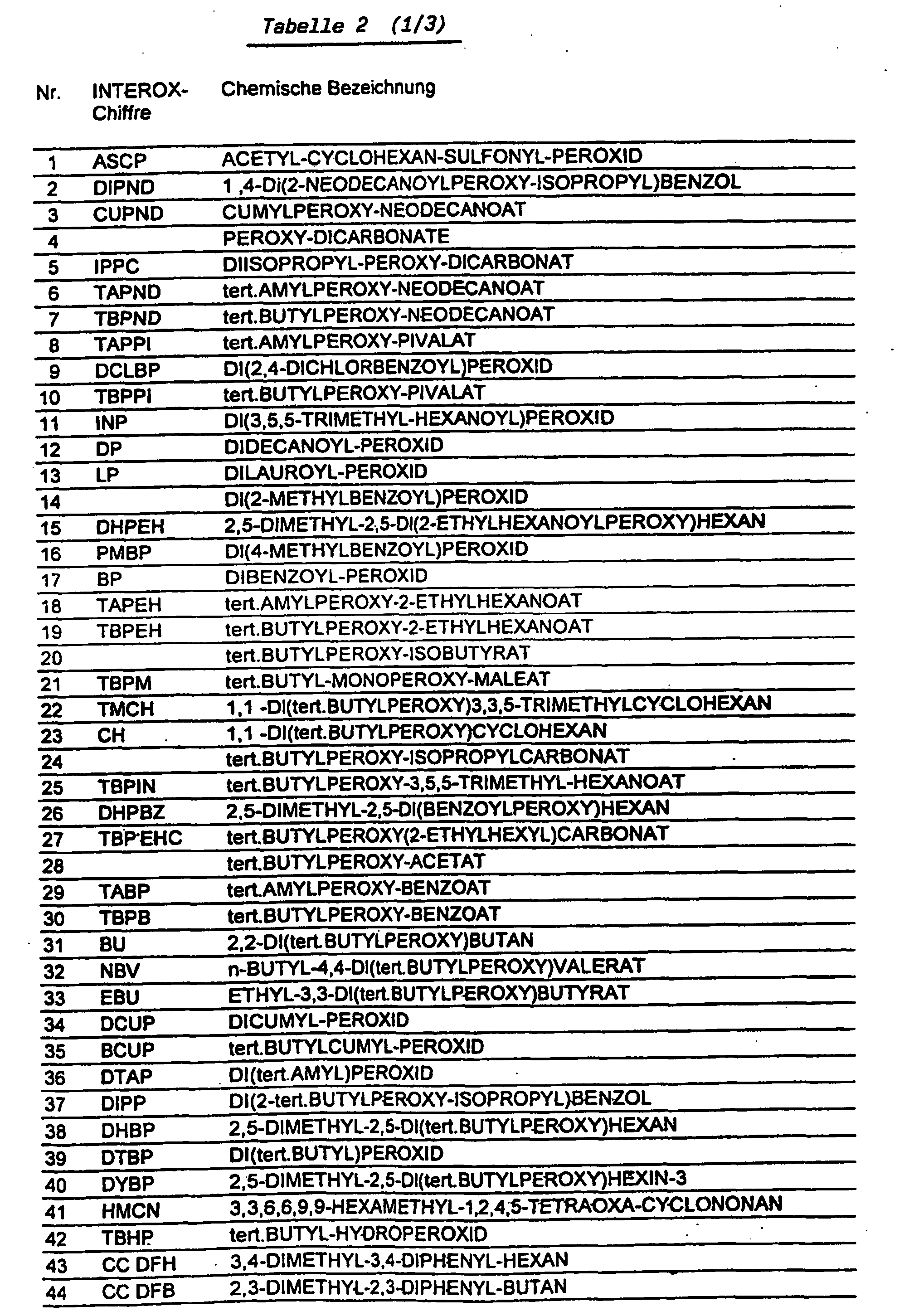

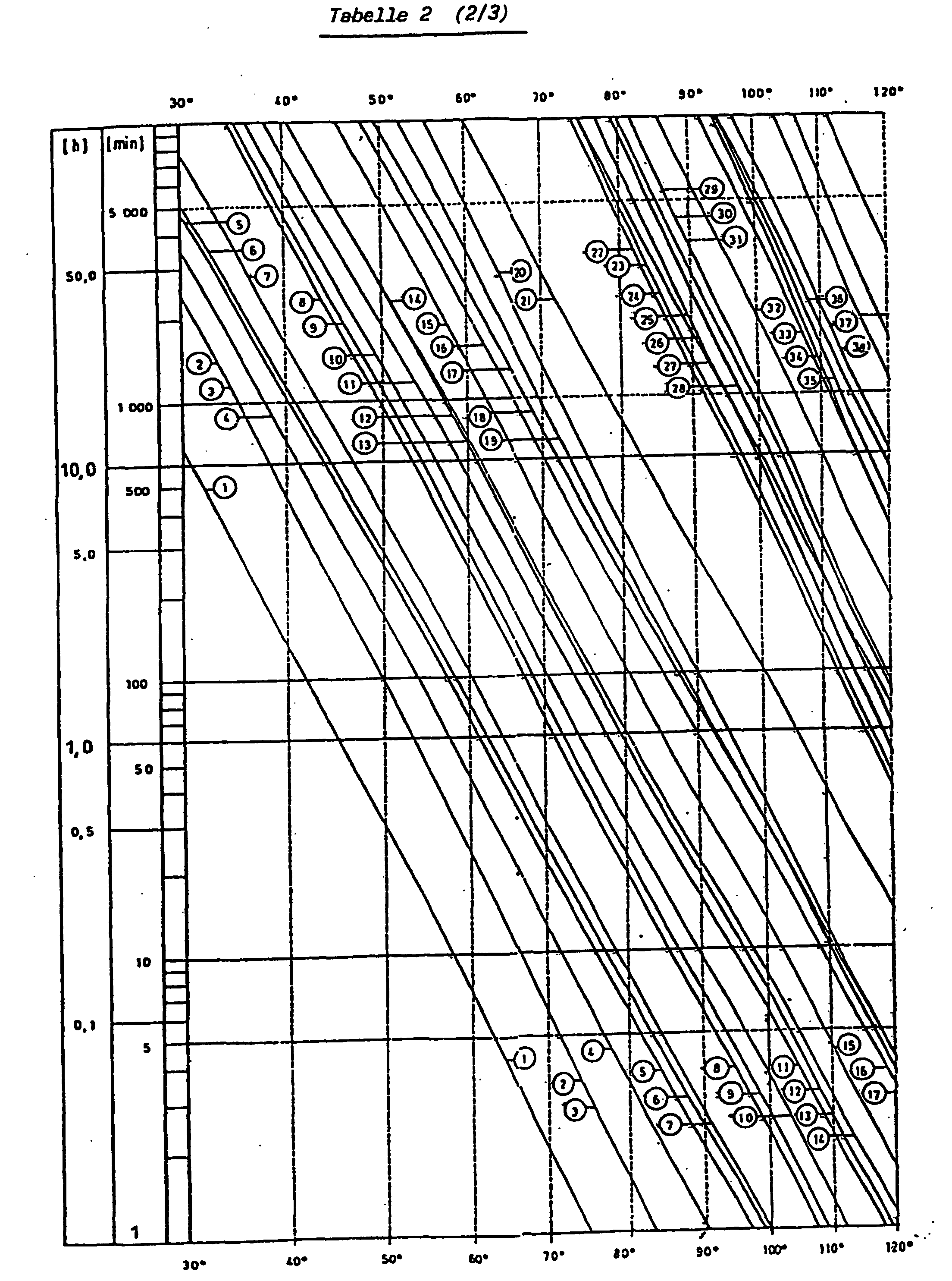

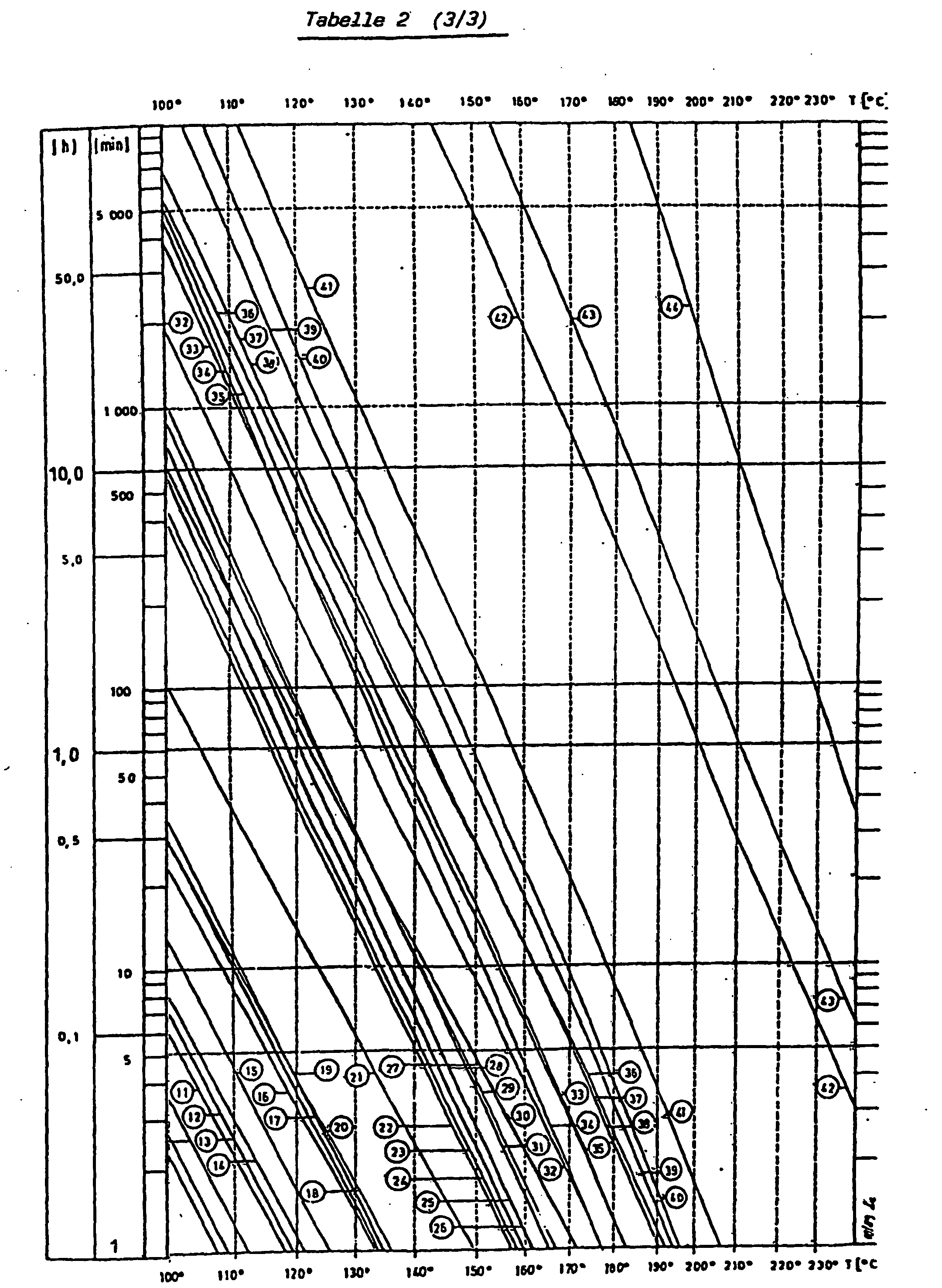

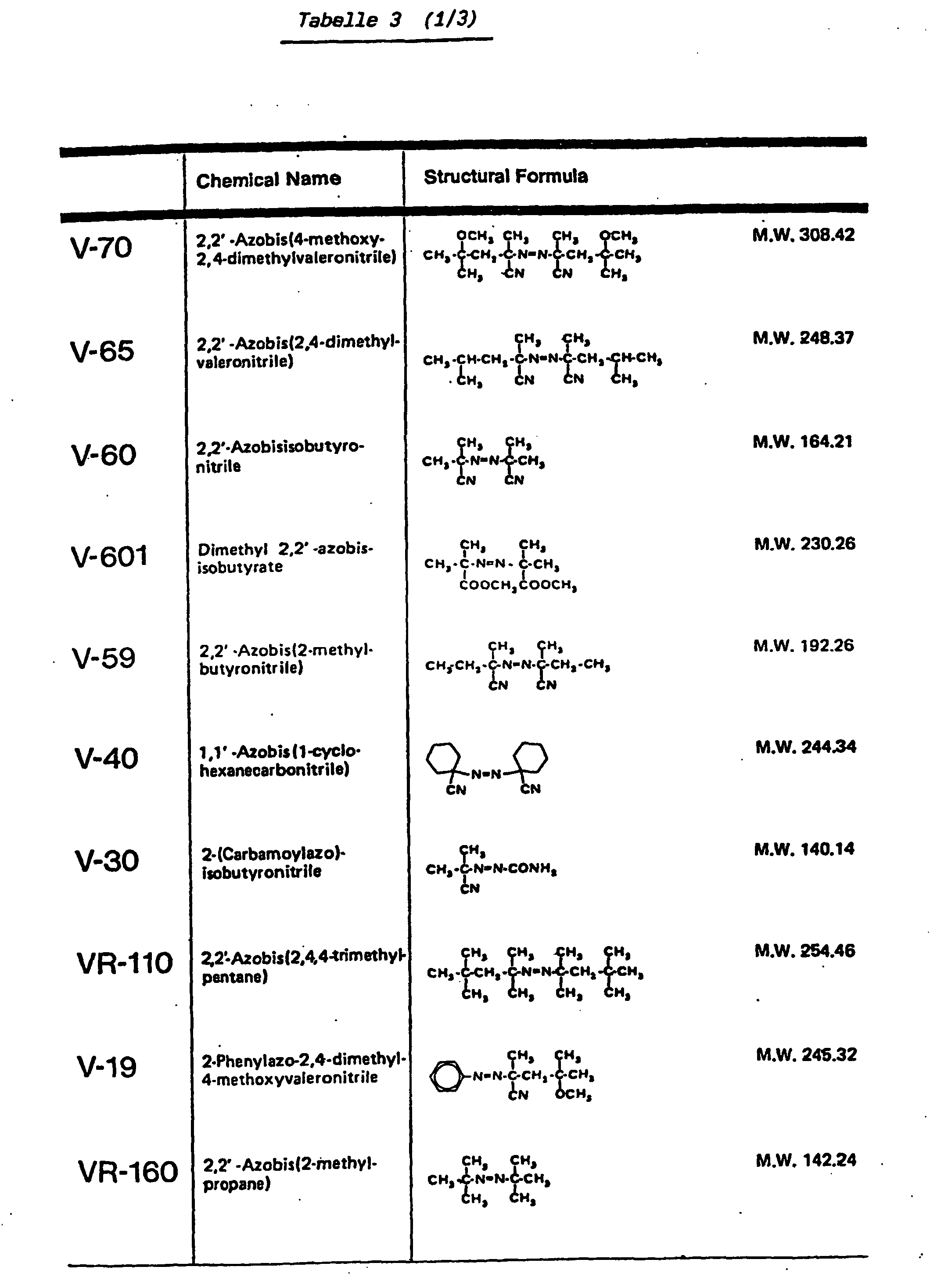

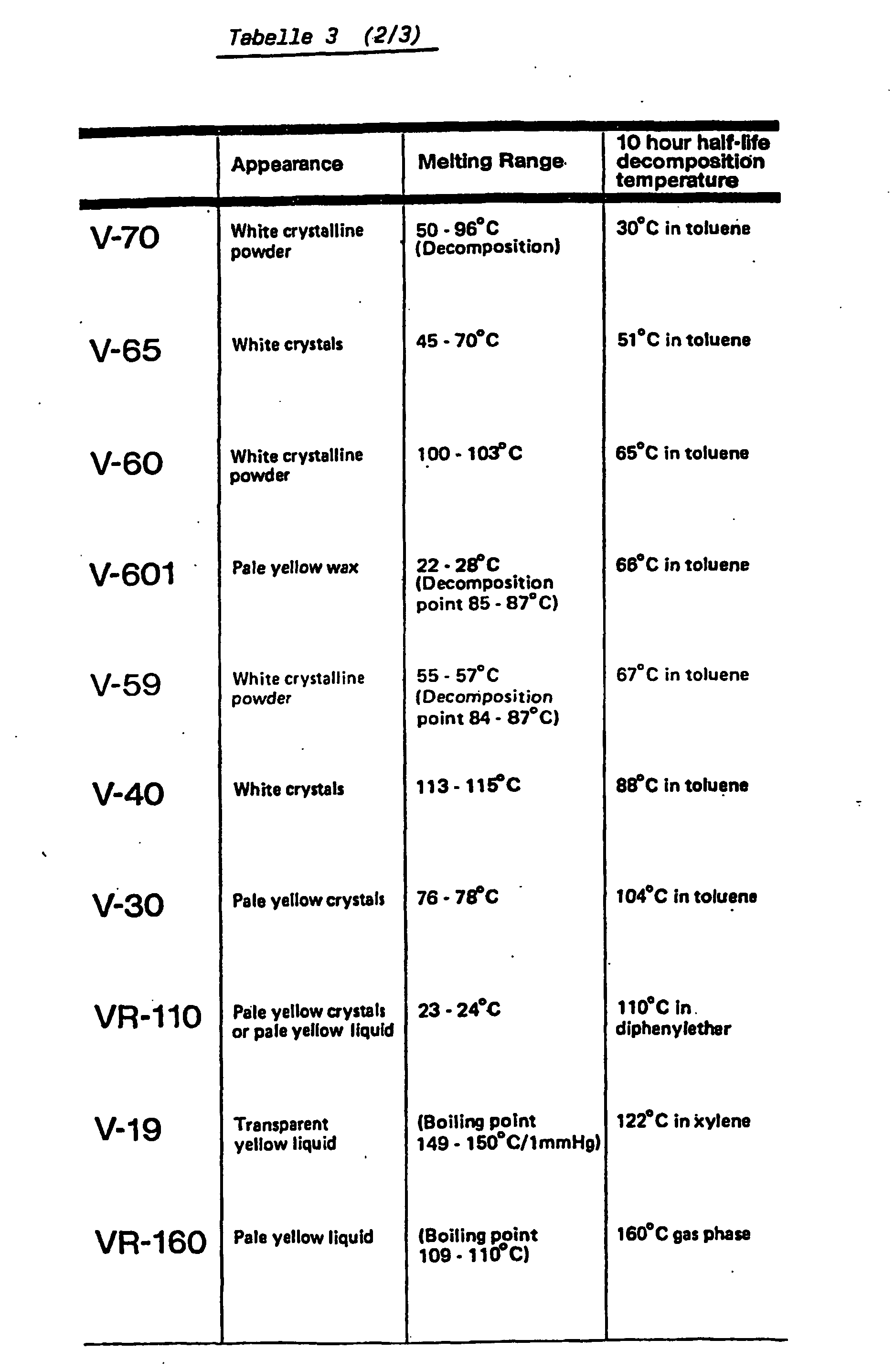

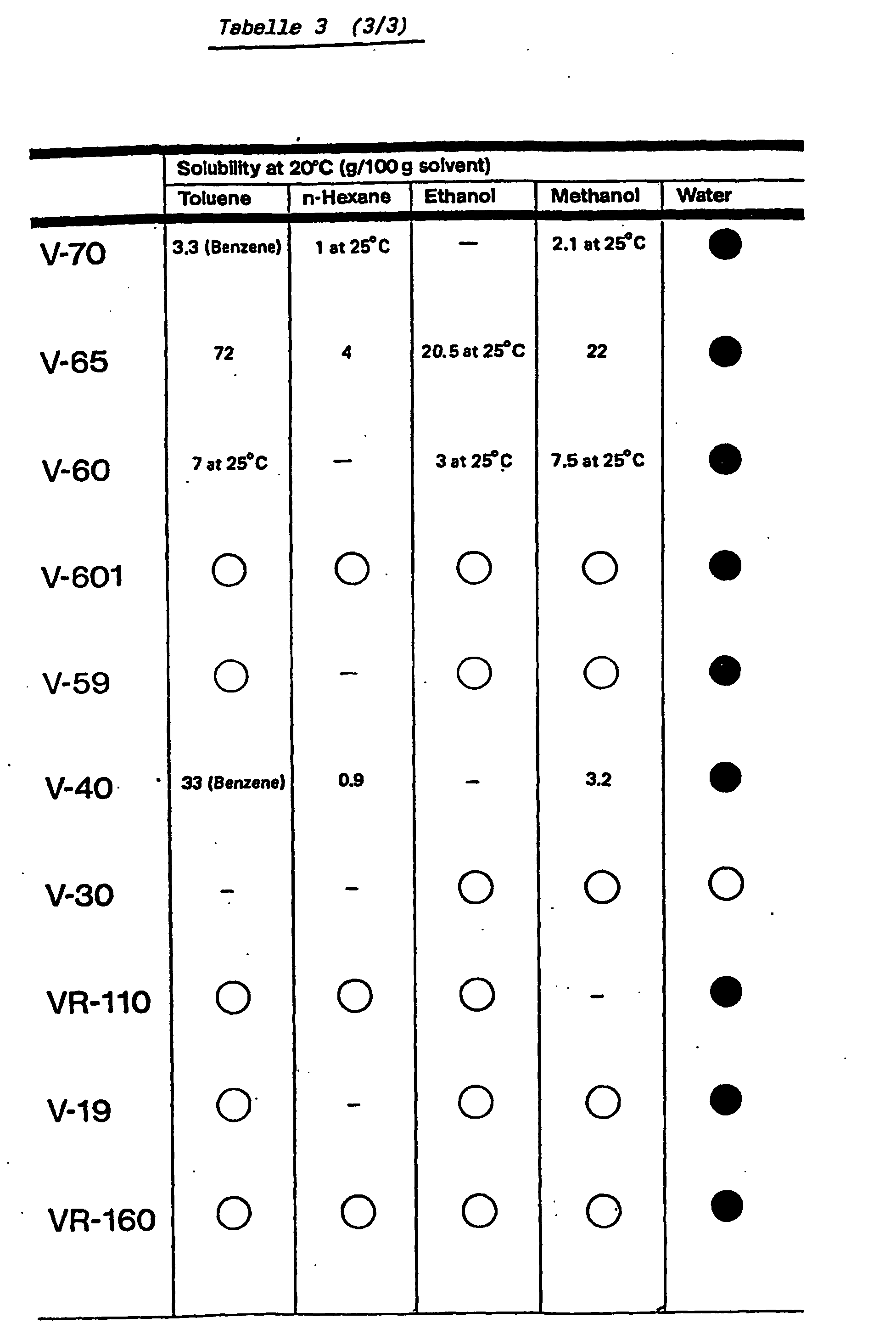

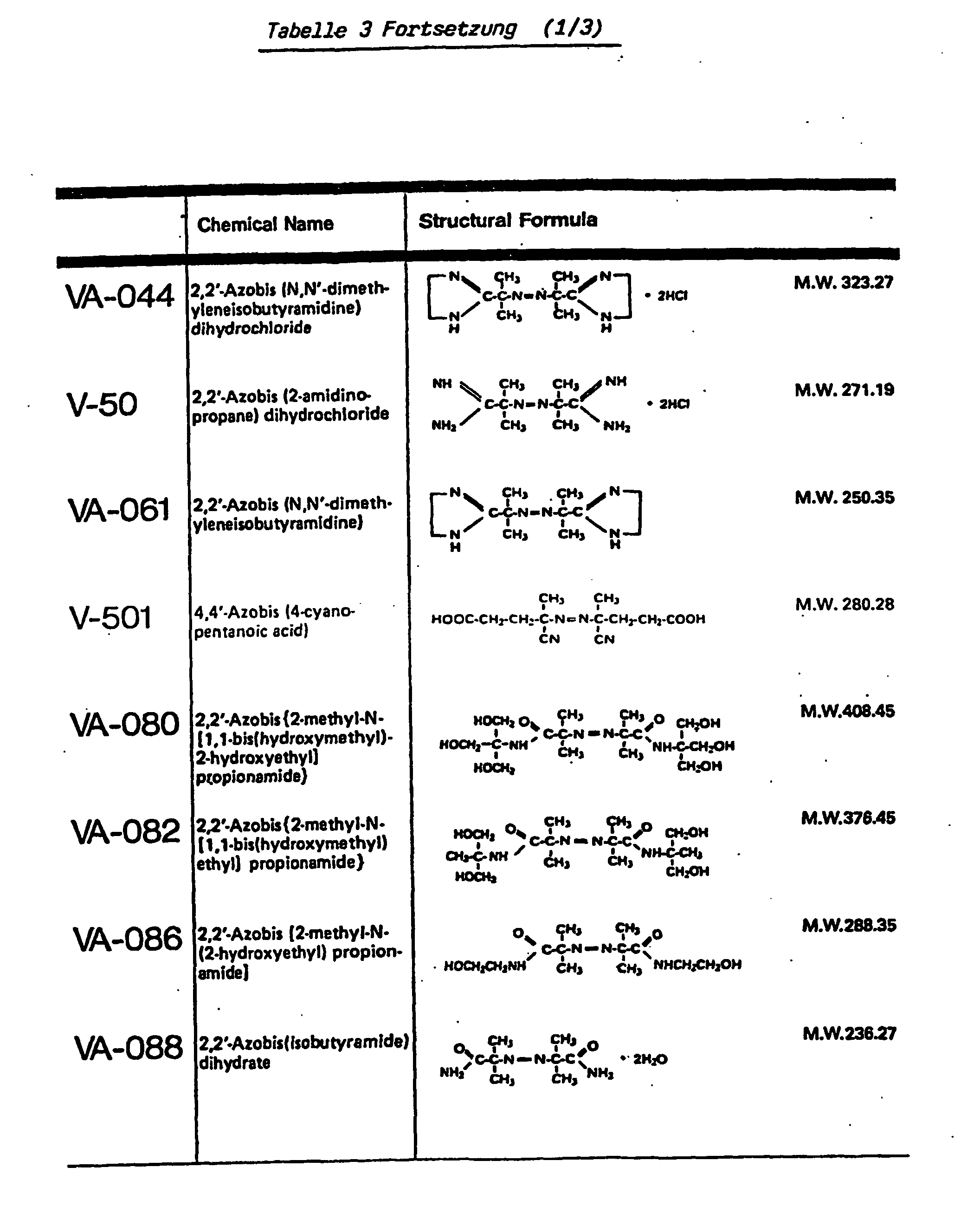

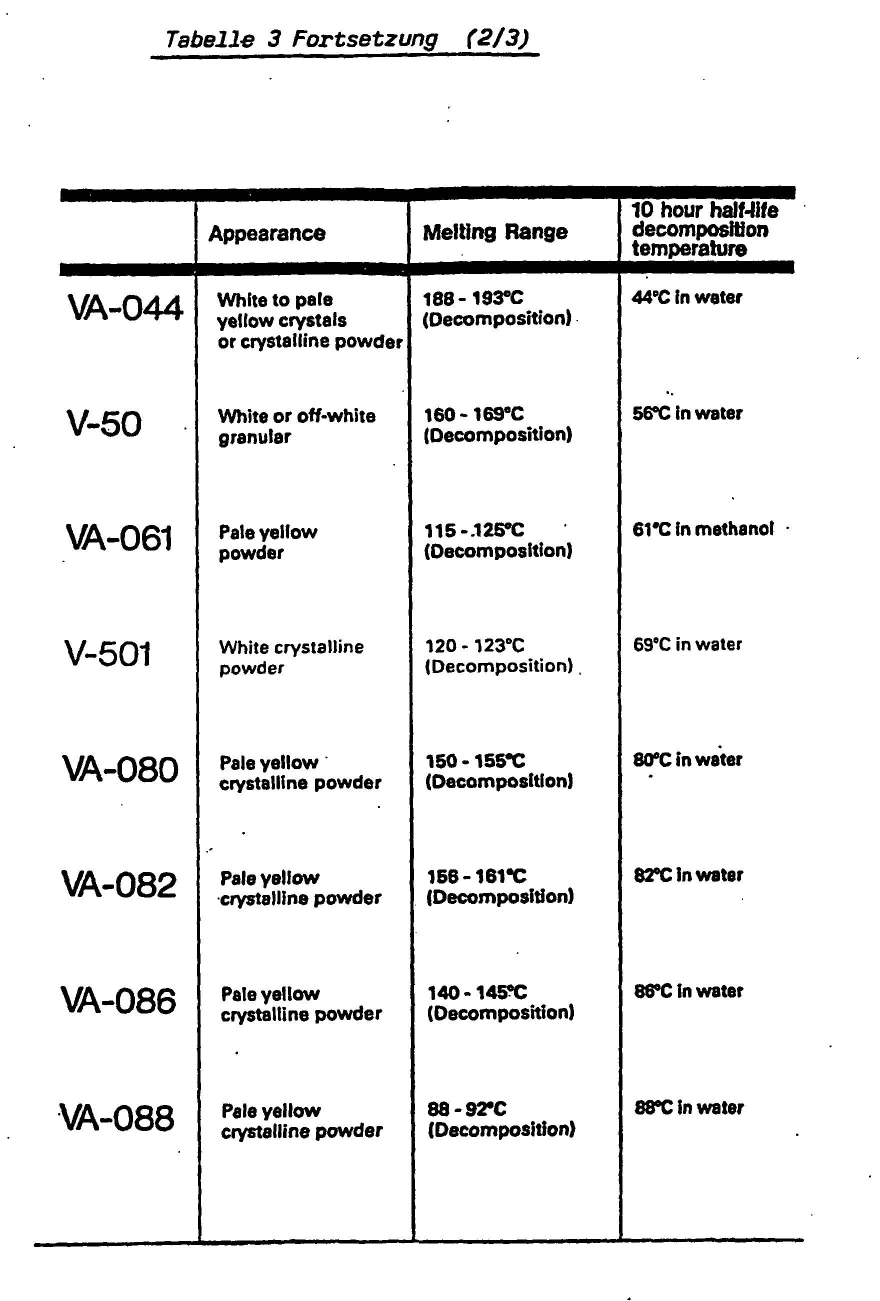

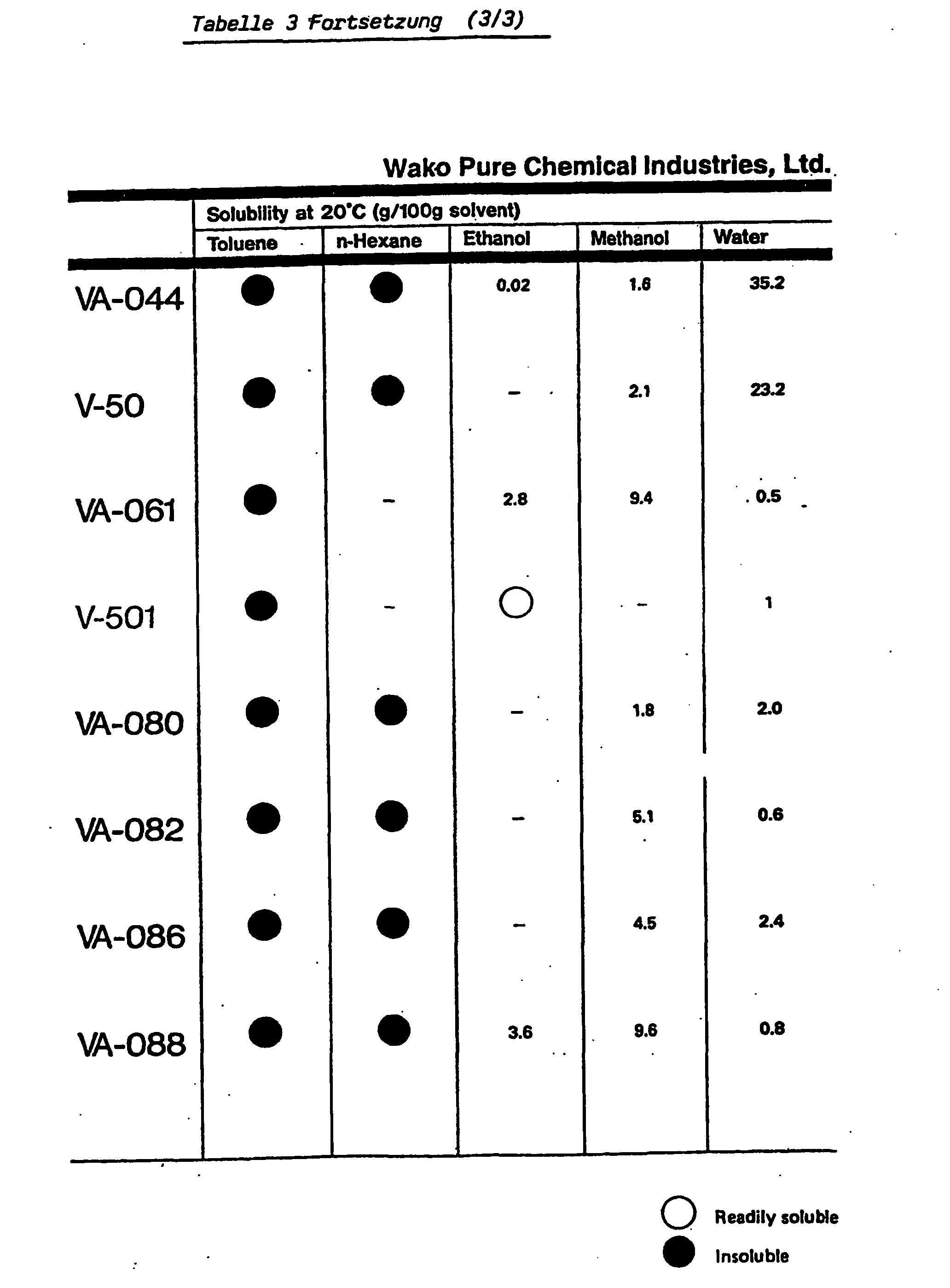

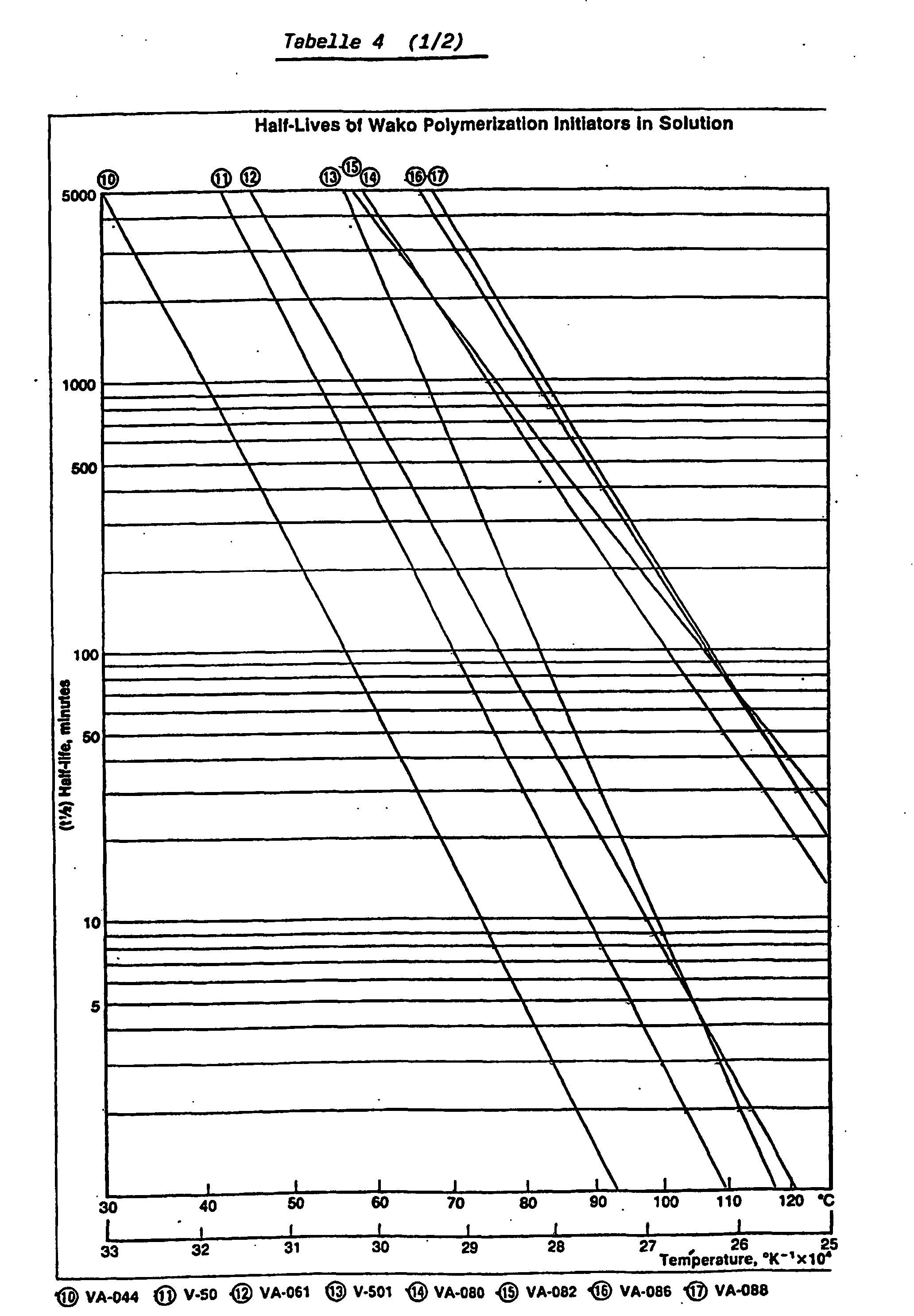

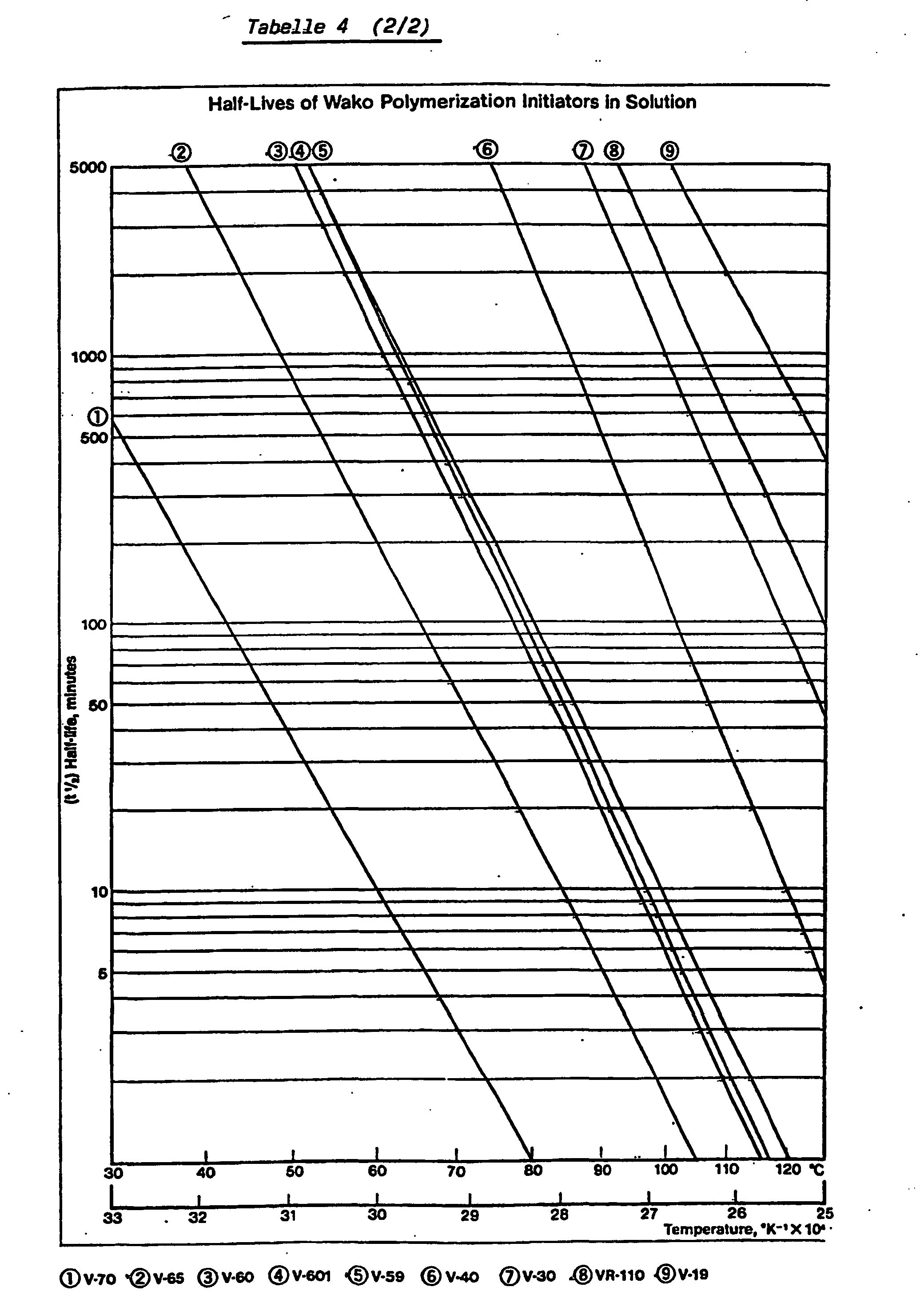

## Patentansprüche

1. Verfahren zur Herstellung von blockförmigen oder plattenförmigen Polymethacrylimidschaumstoffen durch Copolymerisation von Methacrylsäure und Methacrylnitril sowie ggf. weiterer copolymerisierbarer Monomeren in Gegenwart von radikal bildenden Initiatoren, Nachpolymerisation und Zyklisierung des Copolymerisats zum Polyimid in Form von Polymerisatplatten und Umwandlung in einen Schaumstoff,
**dadurch gekennzeichnet,**
**dass** man die Copolymerisation in Gegenwart von einem Gemisch umfassend mindestens vier Initiatoren mit abgestuften Halbwertszeiten durchführt, wobei man als Initiatoren Gemische aus Niedrig-, Mittel- und Hochzerfallern verwendet, die eine Halbwertszeit von einer Stunde in den Bereichen 50-57°C, 60-80°C, 85-105°C und 115-125°C aufweisen.

2. Verfahren nach Anspruch 1, **dadurch gekennzeichnet, dass** die Copolymerisation ganz oder abschnittsweise mittels eines Wasserbads temperiert wird, dessen Temperatur während der ganzen Polymerisationszeit oder jeweils für die Teilabschnitte konstant ist.

3. Verfahren nach mindestens einem der Ansprüche 1 bis 2, **dadurch gekennzeichnet, dass** das Copolymerisationsgemisch Füllmittel enthält.

4. Verfahren nach Anspruch 3, **dadurch gekennzeichnet, dass** das Copolymerisationsgemisch elektrisch leitfähige Partikel enthält.

5. Verfahren nach Anspruch 4, **dadurch gekennzeichnet, dass** die leitfähigen Partikel aus Kohlenstoffasern bestehen.

6. Polymerisatplatten nach Anspruch 1, **gekennzeichnet durch** eine Dicke von >30-80 mm.

7. Verwendung der geschäumten Blöcke oder Platten nach Anspruch 1 als Bauteile beim Flugzeugbau.

## Claims

1. Process for producing polymethacrylimide foams in the form of blocks or sheets by copolymerising methacrylic acid and methacrylonitrile and optionally other copolymerisable monomers in the presence of radical-forming initiators, subsequent polymerisation and cyclisation of the copolymer to the polyimide in the form of polymer sheets and conversion into a foam, **characterised in that** the copolymerisation is carried out in the presence of a mixture comprising at least four initiators with staggered half-lives, the initiators used being mixtures of low, medium and high disintegrators which have a half-life of one hour in the ranges 50-57°C, 60-80°C, 85-105°C and 115-125°C.

2. Process according to claim 1, **characterised in that** the copolymerisation is wholly or partly temperature-controlled by means of a water bath the temperature of which is constant throughout the entire polymerisation time or for particular sections thereof.

3. Process according to at least one of claims 1 to 2, **characterised in that** the copolymerisation mixture contains fillers.

4. Process according to claim 3, **characterised in that** the copolymerisation mixture contains electrically conductive particles.

5. Process according to claim 4, **characterised in that** the conductive particles consist of carbon fibres.

6. Polymer sheets according to claim 1, **characterised by** a thickness of >30-80 mm.

7. Use of the foamed blocks or sheets according to claim 1 as components in aircraft construction.

## Revendications

1. Procédé de fabrication de mousses à base de polyméthacrylimide en forme de blocs ou de plaques par copolymérisation d'acide méthacrylique et de nitrile de méthacryle ainsi que, le cas échéant, de monomères copolymérisables en présence d'amorceurs formant des radicaux, par post-polymérisation et cyclisation des copolymères en polyimide sous forme de plaques polymères et transformation en une mousse,
**caractérisé en ce qu'**
on réalise la copolymérisation en présence d'un mélange renfermant au moins quatre amorceurs avec des demi-vies étagées, les amorceurs utilisés étant des mélanges de décomposeurs à bas, moyen et haut poids moléculaire qui ont une demi-vie d'une heure dans les plages de 50°C à 57°C, de 60°C à 80°C, de 85°C à 105°C et de 115°C à 125°C.

2. Procédé selon la revendication 1,
**caractérisé en ce que**
la copolymérisation est tempérée en totalité ou par séquences au moyen d'un bain d'eau dont la température est constante pendant toute la durée de la polymérisation ou pour chaque séquence.

3. Procédé selon au moins l'une quelconque des revendications 1 à 2,
**caractérisé en ce que**
le mélange de copolymérisation contient des charges.

4. Procédé selon la revendication 3,
**caractérisé en ce que**
le mélange de copolymérisation contient des particules électriquement conductrices.

5. Procédé selon la revendication 4,
**caractérisé en ce que**
les particules conductrices sont constituées de fibres de carbone.

6. Plaques polymères selon la revendication 1,
**caractérisées**
**par** une épaisseur > 30-80 mm.

7. Utilisation des blocs ou plaques moussé(e)s selon la revendication 1, en tant que composant dans l'aéronautique.
